Europäisches Patentamt

European Patent Office

Office européen des brevets

(11) Numéro de publication: **0 334 758**
A1

(12) **DEMANDE DE BREVET EUROPEEN**

(21) Numéro de dépôt: **89400811.9**

(22) Date de dépôt: **22.03.89**

(51) Int. Cl.⁴: **B 65 G 69/18**

(30) Priorité: **23.03.88 FR 8803810**

(43) Date de publication de la demande:
**27.09.89 Bulletin 89/39**

(84) Etats contractants désignés:
**AT BE CH DE ES FR GB GR IT LI LU NL SE**

(71) Demandeur: SPIRAGAINE S.A.
6, rue Hédouin-Heullant B.P. N.10
F-76410 Saint-Aubin-Les-Elbeuf (FR)

(72) Inventeur: Chefson, Patrice
1 Rue Petou
F-76410 Saint Aubin les Elbeuf (FR)

(74) Mandataire: Wagret, Jean-Michel et al
Propi Conseils 23 rue de Léningrad
F-75008 Paris (FR)

Le titre de l'invention a été modifié (Directives relatives à l'examen pratiqué à l'OEB, A-III, 7.3)

(54) **Gaines de déchargement.**

(57) - Dispositif de chargement de produits en vrac du type comportant une gaine formée d'une paroi souple (4) pourvue d'anneaux de renforcement, ladite gaine étant rétractable sous l'action de moyens mécaniques, et la gaine étant apte à guider les matières en vrac depuis une trémie supérieure (2) vers un conteneur inférieur, et le dispositif est caractérisé en ce qu'il comporte un manchon intérieur (3,20,30) de protection disposé à une extrémité, supérieure ou inférieure, de la gaine, le manchon étant concentrique et intérieur à la gaine et de diamètre correspondant sensiblement, avec un faible jeu, au diamètre intérieur des portions repliées en accordéon entre deux arceaux de renforcement, le manchon étant ainsi apte à recevoir contre sa paroi extérieure la partie repliée de la gaine mise en position inactive, de sorte que la partie active de la gaine véhiculant la matière en vrac reste toujours en position tendue.

Fig.4

EP 0 334 758 A1

## Description

## Perfectionnement aux gaines de déchargement

La présente invention concerne les gaines de déchargement utilisées notamment à la base d'un réservoir, une trémie ou un silo en vue de guider les matières solides en vrac (notamment à l'état pulvérulent) et déversées depuis ce conteneur supérieur vers une capacité inférieure telle qu'une citerne, une benne ou analogue.

Les gaines de ce type sont couramment utilisées pour assurer le chargement d'un conteneur transportable par exemple monté sur camion, wagon ou éventuellement des navires ou chalands.

Les gaines de ce type sont généralement constituées d'une structure tubulaire en matériau souple et pourvue à intervalles réguliers d'éléments de renforcement sous forme d'arceaux ou cerceaux étagés ou de spires disposées en hélice.

Ces dispositifs permettent la rétraction en accordéon d'une partie inutilisée de la gaine afin de dégager l'espace libre sous le silo ou l'ensemble de chargement notamment afin de permettre l'arrivée et le départ du véhicule porteur.

De façon habituelle le relevage de la benne s'effectue par une traction exercée depuis un treuil supérieur sur des câbles ou filins supportant par leurs extrémités inférieures un cône de déversement auquel aboutit la base de la gaine.

De sorte que dans le cas le plus fréquent où la gaine n'est pas totalement en position d'extension, une partie contractée ou repliée en accordéon subsiste à la base de la gaine.

Cette partie rétractée en accordéon réduit le diamètre de passage de la gaine par rapport à la partie tendue, de sorte que les matières pulvérulentes ou granuleuses qui arrivent en fin de chute avec une force de percussion importante, viennent frapper cette partie rétractée en entraînant une usure rapide par suite de l'action abrasive des matériaux.

Un premier objet de l'invention est de permettre la mise en place d'une gaine dont la partie active, servant au transit des produits, depuis la base de la trémie ou du silo vers la citerne réceptrice, soit en position tendue, sans repli rétracté en offrant par conséquent lors de la chute des matières en vrac une surface relativement lisse et évitant des sources d'abrasion.

Un autre objet de l'invention est d'éviter la formation à la base de la gaine, en la partie rétractée, de poches dans lesquelles les produits viendraient s'accumuler.

A cet effet l'invention concerne un dispositif de chargement de produits en vrac du type comportant une gaine formée d'une paroi souple pourvue d'anneaux de renforcement, ladite gaine étant rétractable sous l'action de moyens mécaniques, et la gaine étant apte à guider les matières en vrac depuis une trémie supérieure vers un conteneur inférieur, et le dispositif est caractérisé en ce qu'il comporte un manchon intérieur de protection disposé à une extrémité, supérieure ou inférieure de la gaine, le manchon étant concentrique et intérieur à la gaine et de diamètre correspondant sensiblement, avec un faible jeu, au diamètre intérieur des portions repliées en accordéon entre deux arceaux de renforcement, le manchon étant ainsi apte à recevoir contre sa paroi extérieure la partie repliée de la gaine mise en position inactive, de sorte que la partie active de la gaine véhiculant la matière en vrac reste toujours en position tendue.

Selon une forme de réalisation le manchon est en position basse et il est solidaire d'un cône extérieur définissant l'embouchure de la gaine apte à pénétrer dans l'ouverture de remplissage, et le manchon comporte à sa base un libre passage annulaire entre la base de la paroi du manchon et la base de la gaine repliée pour permettre l'évacuation des poussières et particules insérées et accumulées entre les deux parois concentriques respectivement de la gaine et du manchon intérieur.

Mais selon une seconde forme de réalisation préférentielle de l'invention le manchon de protection est situé en partie haute de la gaine et il est apte à recevoir la partie repliée de la gaine constituée par la partie supérieure de cette dernière et la gaine comporte à cet effet des moyens de relevage en prise sur les arceaux de renforcement et apte à provoquer le repli initial par remontée vers le haut d'un arceau supérieur avant l'arceau inférieur, l'accumulation des replis et des arceaux étant ainsi effectuée vers la partie haute autour du manchon central supérieur, la partie active et inférieure de la gaine en dessous dudit manchon étant ainsi totalement maintenue en position tendue.

Plus spécialement dans ce cas les moyens de relevage sont constitués d'au moins et de préférence de deux liens souples repliables, reliés à intervalles réguliers avec les arceaux de renforcement et ces liens courent suivant une génératrice de la gaine, étant par ailleurs soumis à l'action de moyens moteurs en prise sur chacun des liens en étant aptes à assurer sa remontée et sa descente.

Et plus spécialement les moyens moteurs sont disposés à un niveau correspondant à la base du manchon intérieur de protection, lui-même disposé en position supérieure par rapport à l'ensemble de la gaine, et ces moyens moteurs sont prévus pour permettre, lors de la remontée du lien souple, l'accumulation des arceaux en position repliée de la gaine au-dessus desdits moyens moteurs et autour du manchon central.

Plus particulièrement encore les liens souples sont constitués d'au moins deux chaînes disposées chacune selon une génératrice de la gaine, les deux chaînes étant diamétralement opposées par rapport à la gaine tubulaire, et les chaînes sont reliées à intervalles réguliers à chaque arceau, chaque chaîne engrenant sur une roue motrice, les deux roues motrices étant elles-mêmes synchronisées, et chaque chaîne est en outre associée à un frein de retenue constitué d'une roue dentée en prise sur la chaîne et disposée au-dessus de la roue motrice correspondante.

Selon une autre particularité les deux freins, associés chacun à une chaîne, sont disposés au-dessus et à distance convenable de la roue motrice correspondante et chacun des freins est apte à permettre le repos et le supportage du dernier des arceaux appartenant à l'empilement de la partie repliée de la gaine, cette partie repliée reposant par gravité sur l'arceau inférieur lui-même bloqué en position de chaque côté par les freins, les deux freins étant montés à roulement libre dans une direction correspondant au mouvement de remontée des arceaux et étant calibrés d'une part pour résister à la poussée correspondant au poids de la gaine en position rétractée maximum, et d'autre part pour céder à un effort de traction, supérieur au poids ci-dessus, lors de la traction exercée par les roues motrices entraînant la chaîne dans le mouvement de descente et d'appel vers le bas de l'arceau inférieur depuis l'empilement supérieur.

Plus particulièrement encore chaque ensemble de relevage situé sur deux côtés diamétralement opposés de la gaine, comporte deux plaques parallèles et situées dans des plans verticaux, le volume intérieur entre les deux plaques définissant un espace pour le déplacement et le stockage de la chaîne ainsi que pour l'engagement de ladite chaîne sur respectivement les roues dentées motrices et du frein, et la plaque située contre la gaine comporte une rainure verticale permettant le guidage d'une pièce de jonction reliant chacun des arceaux successifs à la chaîne et permettant, au sein de l'empilement, d'assurer la superposition des arceaux en position alignée.

Selon une variante de réalisation la gaine comporte un système de relevage par le haut constitué de deux supports linéaires en matière souple notamment formés d'une bande en matière synthétique élastomère et pourvue de crantages étagés et aptes à recevoir l'action mécanique d'une roue dentée disposée en regard.

Selon une caractéristique également importante de l'invention la partie supérieure de la gaine correspondant au déversement des matières en vrac depuis la trémie ou le conteneur supérieur à l'intérieur de la gaine, comporte un resserrement initial formant effet de tuyère permettant d'une part l'accélération du mouvement vertical descendant des particules ainsi le rapprochement et la concentration de la plus grande partie des matières en vrac vers le centre de la gaine en épargnant ainsi les parois.

D'autres caractéristiques et avantages de l'invention ressortiront de la description qui suit et qui est donnée en rapport avec quelques formes de réalisation particulières présentées à titre d'exemples non limitatifs.

La figure 1 représente une vue schématique en coupe d'un premier exemple de réalisation du dispositif selon l'invention.

La figure 2 représente une vue en perspective avec arraché partiel de la réalisation de la figure 1.

La figure 3 représente une vue en perspective, avec arraché partiel, une seconde forme de réalisation de l'invention.

La figure 4 représente une vue en perspective et schématique d'une troisième forme de réalisation de l'invention.

La figure 5 représente une vue en perspective du dispositif selon la figure 4.

La figure 6 représente une vue de détail en perspective montrant le raccordement de la chaîne de relevage sur les arceaux de renforcement.

La figure 7 montre le même détail de montage que la figure 6 mais vu en coupe verticale.

Et la figure 8 montre une vue en coupe verticale d'une section de la gaine et du dispositif de relevage selon les figures 4,5,6 et 7.

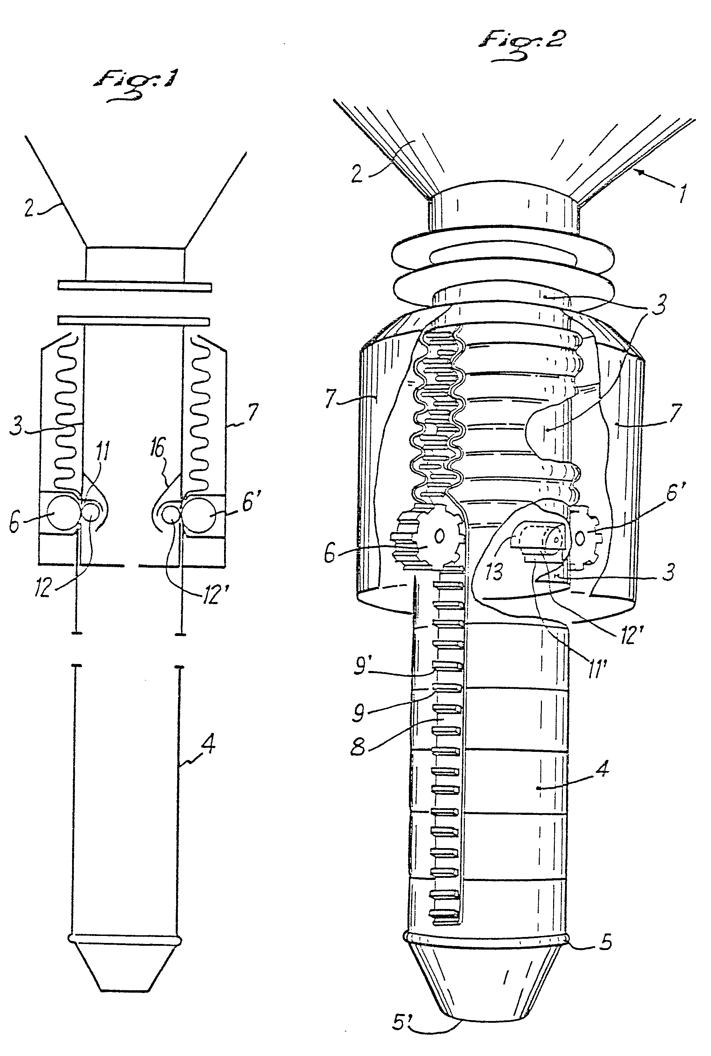

Selon l'exemple des figures 1 et 2 on voit que le dispositif de déversement et de chargement est situé à la base 1 d'une trémie ou silo 2.

Un manchon intérieur 3 est raccordé à la base du silo et il reçoit sur sa face externe le sommet de la gaine réalisée selon une première forme de réalisation de l'invention.

Cette gaine, dans le cas des figures 1 et 2, est formée d'une paroi tubulaire 4 en matériau souple permettant le repli de la gaine en position rétractée ou compactée de façon connue en soi.

La structure souple 4 comporte des éléments de renforcement constitués ici d'arceaux annulaires.

La partie active de la gaine 4 qui déborde en dessous du manchon 3 et qui aboutit par l'embase 5,5′ dans la citerne réceptrice, est sur toute sa longueur en position tendue.

La partie rétractée de la gaine qui est située autour du manchon 3 étant en position inactive.

A cet effet la gaine est associée à des moyens de relevage constitués de roues dentées 6,6′ montées sur et contre les parois extérieures de la gaine. Ces roues dentées subissent l'action d'organes de manoeuvre non représentés et elles attaquent et engrènent sur un dispositif du type "à crémaillère" constitué de bandes disposées selon deux génératrices diamètralement opposées sur les parois de la gaine.

Chaque bande est constituée d'un matériau semi-rigide par exemple élastomère et chaque bande 8 comporte des crantages transversaux 9,9′ ; la bande 8 étant collée sur la paroi de la gaine.

Pour faciliter la manoeuvre de la gaine sous l'action des roues 6 et 6′ on peut prévoir deux poulies d'appui 12 et 12′ situées en regard des roues dentées 6 et 6′. Ces poulies d'appui sont montées sur une console 13 supportée par la paroi intérieure du manchon 3 concentrique et intérieure à la gaine ; les poulies 12 et 12′ sont situées en regard d'une fenêtre 11,11′ qui assure le passage d'une faible partie de la poulie d'appui pour remplir sa fonction.

On comprend que la manoeuvre des roues dentées 6 et 6′ permet de remonter la gaine, dont la partie active inférieure est toujours en position tendue, la partie rétractée de la gaine étant protégée par le manchon intérieur 3 concentrique à la gaine.

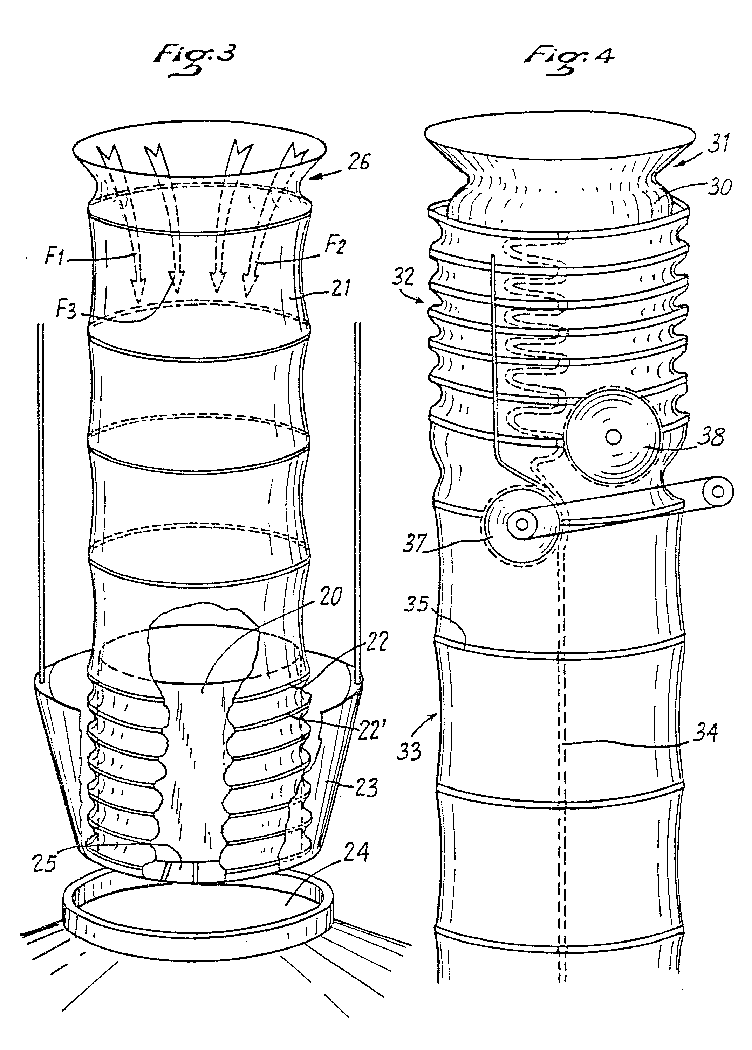

La figure 3 représente une forme de réalisation dans laquelle le manchon de protection 20 est situé à la base de la gaine 21.

Et ce manchon de protection reçoit sur sa paroi extérieure l'empilement des arceaux 22,22' correspondant à la partie inactive de la gaine qui est ici ramassée à la base de cette dernière.

La base de la gaine comporte ici un cône extérieur 23 qui permet l'emboîtement de la base de la gaine sur l'ouverture 24 de la citerne en cours de remplissage.

Le cône extérieur 23 est concentrique au manchon intérieur 20.

Et dans cette forme de réalisation la base de la gaine 21 rejoint la base du cône 23 ; par contre la base du manchon reste séparée de la base du cône 23 par un léger intervalle 25.

Cet intervalle 25 constitue le débouché de l'espace en forme de couronne.qui sépare le manchon 23 de l'empilement des arceaux 22,22'.

Et ce passage 25 permet le dégagement et la chute vers le bas des poussières qui viendraient à s'insérer et à s'accumuler dans l'espace annulaire interstitiel entre le manchon 20 et la partie rétractée de la gaine.

Dans cet exemple de réalisation on remarque en haut de la gaine et au sommet de cette dernière un rétrécissement 26 qui aboutit à recentrer la chute des particules ou matières en vrac en les éloignant des parois : de sorte que la plus grande partie des matières solides déversées rejoindront le manchon de protection 20 pour être déversées dans l'ouverture 24 en épargnant les parois de la gaine.

Ce rétrécissement 26 provoque ainsi un effet de tuyère avec concentration directionnelle de matières comme on le voit par les flèches F1,F2,F3. Outre une diminution de l'usure des parois de la gaine, on accélère le mouvement des particules non ralenties par contact avec les parois, ce qui améliore le rendement.

Selon l'exemple des figures 4 et suivantes le manchon 30 qui comporte à son sommet le rétrécissement formant tuyère 31 est disposé au sommet de la gaine et il reçoit sur son pourtour (comme dans l'exemple des figures 1 et 2) l'empilement de la partie rétractée 32 de la gaine 33. Dans le présent cas la manoeuvre de la gaine est obtenue par deux chaines 34 disposées le long de deux génératrices diamètralement opposées de la gaine 33, la chaîne étant reliée à intervalles réguliers aux arceaux 35 par une pièce de liaison 36. La chaîne est entraînée par la roue motrice 37.

Comme on le voit sur la figure 4 la rotation de la roue 37 dans le sens inverse des aiguilles d'une montre assure la remontée de la chaîne et par conséquent la remontée des arceaux 35,35' successifs et leur mise en position inactive de stockage ou position haute autour du manchon 30.

Le maintien en position de stockage des arceaux est assuré par le frein 38 qui engrène sur la chaîne au niveau de chaque liaison avec un arceau 35.

Le frein est en roue libre dans le sens des aiguilles d'une montre de façon à laisser remonter l'empilement sous l'action de relevage de la roue 37 ; dans le sens inverse des aiguilles d'une montre le frein 38 est calibré de façon à résister à la poussée correspondant au poids de l'empilement maximum de la partie rétractée de la gaine 32.

Par contre le frein est calibré pour céder à une traction supérieure qui est alors exercée par la roue motrice 37 appelant le dégagement de l'arceau en position immédiatement inférieur au sein de l'empilement.

Et lorsque l'arceau immédiatement en position inférieure est dégagé par suite de la traction exercée sur la chaîne par la roue motrice, le frein prend alors en charge l'arceau immédiatement supérieur qui constitue alors l'arceau reposant sur le frein et supportant l'ensemble de l'empilement amont.

Dans ces conditions la roue motrice peut actionner la chaîne pour descendre les arceaux puisque la partie de la chaîne 34 située entre la roue motrice 37 et le frein 38 est dégagé et ne supporte le poids de l'empilement supérieur.

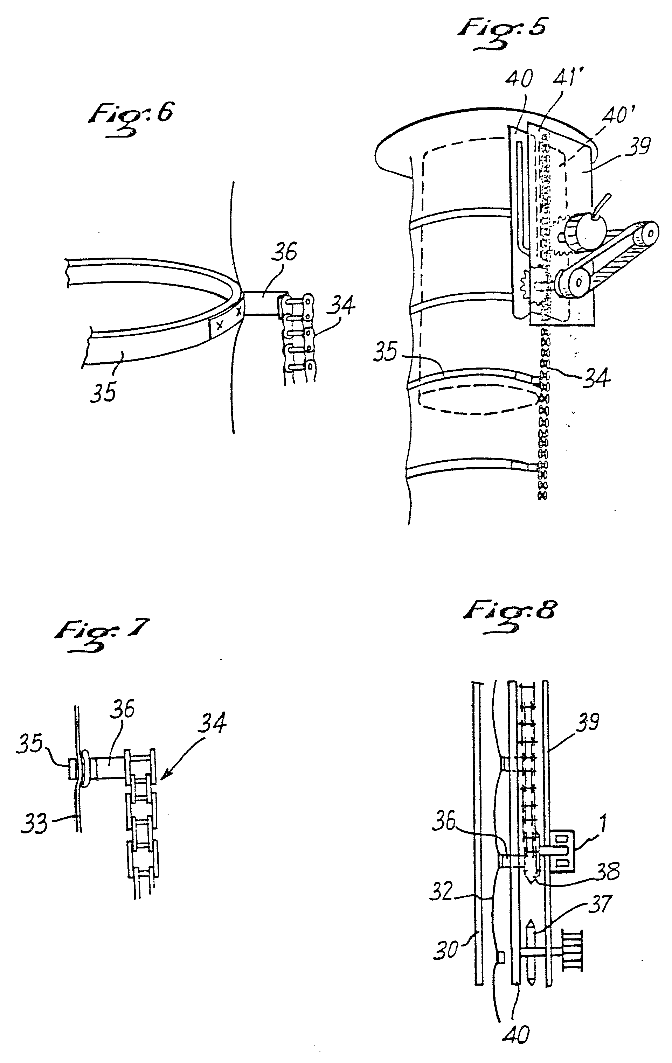

Et de préférence, ainsi qu'on le voit sur la figure 5 l'ensemble mécanique constitué par les roues motrices et la roue dentée du frein 38 engrenant sur la chaîne 34 sont situées entre deux plaques parallèles et verticales ; ces deux plaques comportent une plaque extérieure 39 et une plaque intérieure laquelle est constituée de deux parties jumelées 40,40' définissant entre elles une fente 41 permettant le passage des pièces de liaison successives 36 de sorte que l'empilement des arceaux se trouve constamment guidé par cette fente 41, les arceaux étant ainsi maintenus en position alignée.

## Revendications

1 - Dispositif de chargement de produits en vrac du type comportant une gaine formée d'une paroi souple (4) pourvue d'anneaux de renforcement, ladite gaine étant rétractable sous l'action de moyens mécaniques, et la gaine étant apte à guider les matières en vrac depuis une trémie supérieure (2) vers un conteneur inférieur,
caractérisé en ce qu'il comporte un manchon intérieur (3,20,30) de protection disposé à une extrémité, supérieure ou inférieure, de la gaine, le manchon étant concentrique et intérieur à la gaine et de diamètre correspondant sensiblement, avec un faible jeu, au diamètre intérieur des portions repliées en accordéon entre deux arceaux de renforcement, le manchon étant ainsi apte à recevoir contre sa paroi extérieure la partie repliée de la gaine mise en position inactive, de sorte que la partie active de la gaine véhiculant la matière en vrac reste toujours en position tendue.

2 - Dispositif selon la revendication 1,
caractérisé en ce que le manchon de protection (30) est situé en partie haute de la gaine et il est apte à recevoir la partie repliée de la gaine (32) constituée par la partie supérieure de cette dernière et la gaine comporte à cet effet des moyens de relevage (34) en prise sur les arceaux de renforcement et apte à provoquer le repli initial par remontée vers le haut d'un arceau supérieur avant l'arceau inférieur, l'accumulation des replis et des arceaux étant ainsi effectuée vers la partie haute autour du manchon central supérieur (30), la partie active (33) et inférieure de la gaine en dessous dudit manchon étant ainsi totalement maintenue en position tendue.

3 - Dispositif selon la revendication 2, caractérisé en ce que les moyens de relevage sont constitués d'au moins et de préférence de deux liens souples repliables, reliés à intervalles réguliers avec les arceaux de renforcement (35) et ces liens courent chacun suivant une génératrice de la gaine, étant par ailleurs soumis à l'action de moyens moteurs en prise sur chacun des liens en étant aptes à assurer sa remontée et sa descente.

4 - Dispositif selon la revendication 3, caractérisé en ce que les moyens moteurs (17) sont disposés à un niveau correspondant à la base du manchon intérieur (30) de protection, lui-même disposé en position supérieure par rapport à l'ensemble de la gaine, et ces moyens moteurs sont prévus pour permettre, lors de la remontée du lien souple, l'accumulation des arceaux en position repliée de la gaine au-dessus desdits moyens moteurs et autour du manchon central.

5 - Dispositif selon l'une des revendications 2,3 ou 4, caractérisé en ce que les liens souples sont constitués d'au moins deux chaînes (34) disposées chacune selon une génératrice de la gaine, les deux chaînes étant diamétralement opposées par rapport à la gaine tubulaire, et les chaînes sont reliées à intervalles réguliers à chaque arceau (35), chaque chaîne engrenant sur une roue motrice (37), les deux roues motrices étant elles-mêmes synchronisées, et chaque chaîne est en outre associée à un frein de retenue (38) constitué d'une roue dentée en prise sur la chaîne et disposée au-dessus de la roue motrice correspondante.

6 - Dispositif selon la revendication 5, caractérisé en ce que les deux freins (38), associés chacun à une chaîne (34), sont disposés au-dessus et à distance convenable de la roue motrice correspondante et chacun des freins est apte à permettre le repos et le supportage du dernier des arceaux appartenant à l'empilement de la partie repliée (32) de la gaine, cette partie repliée reposant par gravité sur l'arceau inférieur lui-même bloqué en position de chaque côté par les freins, les deux freins étant montés à roulement libre dans une direction correspondant au mouvement de remontée des arceaux et étant calibrés d'une part pour résister à la poussée correspondant au poids de la gaine en position rétractée maximum, et d'autre part pour céder à un effort de traction, supérieur au poids ci-dessus, lors de la traction exercée par les roues motrices entraînant la chaîne dans le mouvement de descente et d'appel vers le bas de l'arceau inférieur depuis l'empilement supérieur.

7 - Dispositif selon l'une des revendications 3 à 6, caractérisé en ce que chaque ensemble de relevage situé sur deux côtés diamètralement opposés de la gaine, comporte deux plaques parallèles (39,40) et situées dans des plans verticaux, le volume intérieur entre les deux plaques définissant un espace pour le déplacement et le stockage de la chaîne (34) ainsi que pour l'engagement de ladite chaîne sur respectivement les roues dentées motrices (37) et du frein (38), et la plaque située contre la gaine comporte une rainure (41) verticale permettant le guidage d'une pièce de jonction (36) reliant chacun des arceaux (35) successifs à la chaîne (34) et permettant, au sein de l'empilement (32), d'assurer la superposition des arceaux en position alignée.

8 - Dispositif selon la revendication 1, caractérisé en ce que la gaine comporte un système de relevage par le haut constitué de deux supports linéaires en matière souple (8) notamment formés d'une bande (8) en matière synthétique élastomère et pourvue de crantages (9,9') étagés et aptes à recevoir l'action mécanique d'une roue (6,6') dentée disposée en regard.

9 - Dispositif selon l'une des revendications 1 à 8, caractérisé en ce que la partie supérieure de la gaine correspondant au déversement des matières en vrac depuis la trémie ou le conteneur supérieur à l'intérieur de la gaine, comporte un resserrement (26,31) initial formant effet de tuyère permettant d'une part l'accélération du mouvement vertical descendant des particules ainsi le rapprochement et la concentration de la plus grande partie des matières en vrac vers le centre de la gaine en épargnant ainsi les parois.

Fig.1

Fig.2

Fig.3

Fig.4

Fig:5

Fig:6

Fig:7

Fig:8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-2 821 210  (IBAU)<br>--- | | B 65 G   69/18 |
| A | FR-A-2 387 180  (K.-H. STANELLE)<br>----- | | |

**DOMAINES TECHNIQUES RECHERCHES (Int. Cl.4)**

B 65 G

Le présent rapport a été établi pour toutes les revendications

| Lieu de la recherche | Date d'achèvement de la recherche | Examinateur |
|---|---|---|
| LA HAYE | 29-06-1989 | VAN ROLLEGHEM F.M. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
......................................................................
& : membre de la même famille, document correspondant

EPO FORM 1503 03.82 (P0402)